# EUROPEAN PATENT SPECIFICATION

(11) **EP 3 061 351 B1**
(45) Date of publication and mention of the grant of the patent: **10.01.2018**
(21) Application number: 15155044.9
(22) Date of filing: 13.02.2015
(51) Int. Cl.: A23K 50/60, A23L 33/00

(54) **Food product for young subjects**
Nahrungsmittelprodukt für junge Personen
Produit alimentaire pour jeunes sujets

(43) Date of publication of application: 31.08.2016
(73) Proprietor: Dopharma Research B.V., 4941 VX Raamsdonksveer (NL)
(72) Inventor: SCHILDER, Yvonne Dorothé Cecile, 4941 VX Raamsdonksveer (NL)
(74) Representative: V.O.

(56) References cited:
- EP-A2- 0 376 628
- EP-A2- 0 600 439
- WO-A1-02/49445
- WO-A1-2007/054103
- DATABASE GNPD [Online] MINTEL; 31 January 2015 (2015-01-31), anonymous: "Sour cream", XP002739958, Database accession no. 2919783

### SEQUENCE LISTING

<110> Dopharma Research B.V.
<120> Food product for young subjects
<130> P106506EP00
<140> EP 15155044.9
   <141> 2015-02-13
<160> 6
<170> PatentIn version 3.5
<210> 1
   <211> 23
   <212> DNA
   <213> Artificial Sequence
<220>
   <223> primer
<400> 1
   ccaaagcttc atgactgaat tgc 23
<210> 2
   <211> 18
   <212> DNA
   <213> Artificial Sequence
<220>
   <223> primer
<400> 2
   cgaccaccga caccgatg 18
<210> 3
   <211> 22
   <212> DNA
   <213> Artificial Sequence
<220>
   <223> primer
<400> 3
   gcaggcctaa cacatgcaag tc 22
<210> 4
   <211> 20
   <212> DNA
   <213> Artificial Sequence
<220>
   <223> primer
<400> 4
   ctgctgcctc ccgtaggagt 20
<210> 5
   <211> 21
   <212> DNA
   <213> Artificial Sequence
<220>
   <223> primer
<400> 5
   gcagcagtag ggaatcttcc a 21
<210> 6
   <211> 20
   <212> DNA
   <213> Artificial Sequence
<220>
   <223> primer
<400> 6
   gcatttcacc gctacacatg 20

## Description

### Field of the invention

The invention relates to the field of food products, in particular to a feed supplement.

### Background of the invention

In intensive livestock, a large number of animals is kept on a relatively small space. Infections can spread easily and the housing might be accompanied by stress. Furthermore, certain phases induce additional stress, such as the phase of weaning for young animals, such as piglets and calves. Weaning is accompanied by several stressors for piglets, such as change of environment with concomitant change of bacterial community, change of littermates, and feed. This phase is very challenging for piglets and often comes with physiological problems such as bacterial infections that cause diarrhea. Scouring is very common and might lead to death of up to 10% of weaned piglets. In case piglets survive, the growth will be retarded and in a market in which margins are under great pressure, reducing intestinal inflammation that accompanies weaning to prevent health problems is of utmost importance for economic health of farms. In The Netherlands, the use of antibiotics is legally reduced to 50% in 2013 as compared to 2009 and this needs to be increased to 70% in 2015. Furthermore, organic farming market share is increased by 25% annually. In organic farming, use of antibiotics is reduced to a minimum. Therefore, there is a strong need for products that endorse health of young animals in the vulnerable period of weaning other than with the use of antibiotics.

WO2007/054103 discloses compositions, administered to piglets before weaning and comprising bovine colostrum, whole egg, whey, lauric acid and palmitoleic acid. The composition has a beneficial effect on the survival of the newborn piglets.

EP0376628 discloses vegetable fat compositions for infant formulas, comprising lauric acid and palmitoleic acid.

### Summary of the invention

It is an object of the present invention to provide a nutritional composition that supports the health, in particular the intestinal health, of a young subject, preferably an animal, for instance to better prepare the subject for the stress of weaning. The invention therefore provides a food product comprising fat, protein and carbohydrate, wherein the ratio of fat:protein is between 2:1 and 32:1, the product further comprising lauric acid, palmitoleic acid and cholesterol, wherein lauric acid is present in an amount of 15-80 wt% of total solids, palmitoleic acid is present in an amount of 0.1-1.5 wt% of total solids and cholesterol is present in an amount of 0.2-3.5 wt% of total solids. The food product is preferably a feed supplement.

In a further aspect the invention provides a food product for use in a method for stimulating growth of a subject comprising administering to said subject a food product according to the invention, whereby said food product is preferably administered at least before weaning of said subject.

In a still further aspect the invention provides a food product for use in a method for preventing disease in a subject comprising administering to said subject a food product according to the invention, whereby said food product is preferably administered at least before weaning of said subject.

In a still further aspect the invention provides a food product for use in a method for maintaining or improving intestinal health of a subject comprising administering to said subject a food product according to the invention, whereby said food product is preferably administered at least before weaning of said subject.

In a still further aspect the invention provides a composition comprising fat, protein and carbohydrate, wherein the ratio of fat:protein is between 2:1 and 32:1, the composition further comprising lauric acid, palmitoleic acid and cholesterol, wherein lauric acid is present in an amount of 15-80 wt% of total solids, palmitoleic acid is present in an amount of 0.1-1.5 wt% of total solids and cholesterol is present in an amount of 0.2-3.5 wt% of total solids, for use in a method of stimulating growth of a subject, preventing disease in a subject and/ or for maintaining or improving intestinal health of a subject, preferbly after weaning.

### Detailed description

The invention relates to preparing young subjects for the challenging period of weaning, in particular by providing the young subject with a food product during the period shortly before weaning, and/or the period directly following birth of a young subject. Preparation of the subjects for the challenging period of weaning by using a food product of the invention is more effective than applying strategies after weaning, when inflammation has already started. In that case, it is often necessary to counteract inflammation using antibiotics. The food products of the present invention reduces or even obviates the need for antibiotic treatment of young animals to counteract inflammation resulting from stress that is associated with weaning. The food product of the invention is preferably a feed supplement. As used herein the term "feed supplement" refers to a composition that is fed to a subject in addition to its regular diet, such as mother's milk or an animal feed. The feed supplement can be mixed with such regular diet or provided to a subject separately from the regular diet.

A food product, preferably feed supplement, according to the invention comprises fat, protein and carbohydrate, wherein the ratio of fat:protein is between 2:1 and 32:1. Preferably, the ratio of fat:protein is between 4:1 and 16:1, more preferably between 6:1 and 12:1, more preferably between 7:1 and 10:1, most preferably between about 24:3 and 25:3. Preferably, the ratio of protein:carbohydrates in a food product according to the invention is between 5:1 and 1:5, preferably between 4:1 and 1:2, more preferably between 1:1 and 2:1. In a particularly preferred food product of the invention, preferably a piglet food product, the ratio fat:protein:carbohydrate is about 24:3:2.5 - 25:3:2. The food product according to the invention preferably has a caloric value of 30-40 kJ per g of total solids.

A food product, preferably feed supplement, according to the invention preferably further comprises oleic acid, linoleic acid and/or palmitic acid, more preferably oleic acid, linoleic acid and palmitic acid. Oleic acid is preferably present in an amount of 0.5-60 wt% of total solids, more preferably 2-50 wt% of total solids. Linoleic acid is preferably present in an amount of 0.3-65 wt% of total solids, more preferably 0.6-50 wt% of total solids. Palmitic acid is preferably present in an amount of 2.5-13 wt% of total solids, more preferably 3-10 wt% of total solids, more preferably 4-8 wt% of total solids, most preferably 5-7 wt% of total solids.

A particularly preferred food product, preferably feed supplement, according to the invention comprises medium chain triglycerides (MCT), mono-unsaturated fatty acids (MUFA) and cholesterol, wherein said MCT are present in an amount of 15-80 wt% of total solids, said MUFA are present in an amount of 0.1-1.5 wt% of total solids and said cholesterol is present in an amount of 0.2-3.5 wt% of total solids. Medium chain triglycerides (MCTs) as used herein are defined as triglycerides (consisting of three molecules of fatty acid esterified to glycerol) that contain 8, 10 or 12 carbon fatty acid. MCT preferably comprise fatty acids caprylic acid, capric acid and/or lauric acid. Capric acid, lauric acid and caprylic acid increase levels of high-density lipoprotein (HDL). In particular lauric acid increases total serum cholesterol, whereby most of the increase is attributable to an increase in high-density lipoprotein (HDL). Monounsaturated fatty acids (MUFAs) are defined as fatty acids that have one double bond in the fatty acid chain with all of the remainder carbon atoms being single-bonded. A particularly preferred MUFA present in a food product according to the invention is palmitoleic acid. Hence, said food product preferably comprises lauric acid, palmitoleic acid and/or cholesterol, more preferably lauric acid, palmitoleic acid and cholesterol. Lauric acid is preferably present in a food product in an amount of 15-80 wt% of total solids, more preferably 20-65 wt% of total solids, more preferably 26-53 wt% of total solids, more preferably 33-40 wt% of total solids, most preferably 34-37 wt% of total solids such as about 35 wt% of total solids or about 36 wt% of total solids. Palmitoleic acid is preferably present in a food product in an amount of 0.1-1.5 wt% of total solids, more preferably 0.2-1.2 wt% of total solids, more preferably 0.3-1.0 wt% of total solids, more preferably 0. 4-0. 8 wt% of total solids, most preferably 0.5-0.7 wt% of total solids, such as about 0.6 wt% of total solids. Cholesterol is preferably present in a food product in an amount of 0.2-3.5 wt% of total solids, more preferably 0.3-2.5 wt% of total solids, more preferably 0.4-2 wt% of total solids, more preferably 0.5-1.5 wt% of total solids, most preferably 0.6-1 wt% of total solids, such as about 0.7 wt% of total solids, or 0.8 wt% of total solids. Said food product further preferably comprises oleic acid and linoleic acids. Oleic acid is preferably present in such food product in an amount of 0.6-20 wt% of total solids, preferably 2-10 wt% of total solids, more preferably 3-7 wt% of total solids, more preferably 3.5-5 wt% of total solids, most preferably 4-4.6 wt% of total solids, such as about 4.3 wt% of total solids, about 4.4 wt% of total solids or about 4.5 wt% of total solids. Linoleic acid is preferably present in such food product in an amount of 0.3-7 wt% of total solids, preferably 0.5-4.5 wt% of total solids, more preferably 0.6-2.5 wt% of total solids, most preferably 0.7-1.5 wt% of total solids, such as about 0.9 wt% of total solids, about 1 wt% of total solids or about 1.1 wt% of total solids.

As demonstrated in the Examples, a food product according to the invention comprising medium chain triglycerides (MCT), preferably lauric acid, mono-unsaturated fatty acids (MUFA), preferably palmitoleic acid, and cholesterol, wherein said MCT are present in an amount of 15-80 wt% of total solids, said MUFA are present in an amount of 0.1-1.5 wt% of total solids and said cholesterol is present in an amount of 0.2-3.5 wt% of total solids (referred to as Y-D-Fix in the Examples) is particularly preferred because it is able to reduce the IL-8 increase induced by deoxynivalenol (DON) in piglets after weaning, indicating an anti-inflammatory effect as IL-8 is markedly expressed in inflamed gut mucosa and is known to be involved in the early process of gut inflammation. Importantly, the average daily weight gain is increased in piglets supplemented with such food product following administration thereof. Further, administration of such food product increased villi length in the intestine. Weaning of piglets usually results in reduced villi length, while increased villi length is important because it increases intestinal surface area and therefore the capacity for uptake of nutrients. Start of the weaning phase with increased villi length is therefore beneficial for piglets to overcome the physiological changes. Without wishing to be bound by theory, it is believed that such composition is particularly useful to improve health of piglets in the vulnerable period of weaning because the composition resembles the fat and cholesterol content and specific fatty acid profile found in sow's milk in the '80's and '90's. The present inventor analyzed fatty acid composition of sow's milk and found that the current fat and cholesterol content of sow's milk differs to a high extend to that from the value reported for sow's milk in the '80's and '90's in literature. Fat content was 1.00% +/- 0.51%. This fat content of sow's milk obtained for this study was 6 - 12 times lower than the reported value for sow's milk in the '80's and '90's. Cholesterol content of was ∼8 times lower than published values. Those changes might be due to the breeding programs of sows, which are targeted at litter size, meat quality, back fat thickness, feed efficiency, average daily gain and age to 110 kg. Litter size in Duroc, Landrace and Yorkshire increased from on average 8.6 live born in 1992 to 9.9 live born in 2005 and to 13.8 live born piglets per litter English Landrace x English Large White in 2014. Milk composition seems to be not taken into account in breeding programs in the last two decades and it seems that milk composition did not co-evolve with this increase in litter size, but only quantity and protein content did. Protein content stayed similar during this change of bred. The inventor found that sow's milk contains on average 7.6% protein, which was slightly higher than literature which reported 5.2% to 3.2 - 5.5%. Therefore, a preferred food product for piglets in accordance with the invention aims to increase the ingested amount of fat and cholesterol, and to provide the specific fatty acids found in sow's milk fat.

Provided is therefore a food product, preferably a feed supplement, comprising fat, protein and carbohydrate, wherein the ratio of fat:protein is between 2:1 and 32:1, preferably between 7:1 and 10:1, further comprising lauric acid, palmitoleic acid and cholesterol, wherein said lauric acid is present in an amount of 15-80 wt% of total solids, preferably 33-40 wt% of total solids, said palmitoleic acid is present in an amount of 0.1-1.5 wt% of total solids, preferably 0.4-0. 8 wt% of total solids, and said cholesterol is present in an amount of 0.2-3.5 wt% of total solids, preferably 0.5-1.5 wt% of total solids. Said food product preferably comprises sea buckthorn oil as source of said palmitoleic acid and coconut oil as source of said lauric acid. Further, said food product preferably comprises about 80-85 wt% total fat of total solids, 9-11 wt% total protein of total solids and 7-8 wt% total carbohydrates of total solids. A particularly preferred food product comprises lauric acid in an amount of 34-37 wt% of total solids, palmitoleic acid in an amount of 0.5-0.7 wt% of total solids and cholesterol in an amount of 0.6-1 wt% of total solids, preferably comprising sea buckthorn oil as source of said palmitoleic acid and coconut oil as source of said lauric acid. Said food product further preferably comprises oleic acid in an amount of 4-4.6 wt% of total solids and linoleic acid in an amount of 0.7-1.5 wt% of total solids.

Said food product, preferably feed supplement, further preferably comprises about 41% of saturated fat, of which about 27% is of medium chain length (C8, C10 and C12) and 14% is of long chain length (≥C14). C12:0 (lauric acid) preferably comprises about 21% of fat. Mono unsaturated fatty acid (MUFA) content of a preferred food product is about 6% and poly unsaturated fatty acid (PUFA) of a preferred food product content is about 2%.

In a particular embodiment, the invention provides a food product, preferably feed supplement, according to the invention comprising per 25 g of food product, preferably feed supplement, 2.76 g of egg yolk powder, 0.24 g of sea buckthorn oil, 10.60 g of coconut oil, 0.60 g of sodium caseinate, 0.99 g of lactose and 9.82 g of water.

Another food product, preferably feed supplement, not according to the invention, comprises oleic acid and/or linoleic acid, preferably oleic acid an linoleic acid, wherein said oleic acid is present in an amount of 7-80 wt% of total solids and said linoleic acid is present in an amount of 7-80 wt% of total solids.

Oleic acid is present in such food product in an amount of 7-80 wt% of total solids, preferably 20-65 wt% of total solids, more preferably 25-55 wt% of total solids, more preferably 30-45 wt% of total solids most preferably 35-40 wt% of total solids, such as about 36 wt% of total solids, about 37 wt% of total solids or about 38 wt% of total solids.

Linoleic acid is present in a food product in an amount of 7-80 wt% of total solids, preferably 20-65 wt% of total solids, more preferably 25-55 wt% of total solids, more preferably 30-45 wt% of total solids most preferably 35-40 wt% of total solids, such as about 37 wt% of total solids, about 38 wt% of total solids or about 39 wt% of total solids.

As demonstrated in the Examples, a food product comprising oleic acid in an amount of 7-80 wt% of total solids and linoleic acid in an amount of 7-80 wt% of total solids (referred to as Ennovy in the Examples) is disclosed because it is able to increase the average daily weight gain in piglets supplemented with such food product following administration thereof. Further, administration of such food product increased villi length in the intestine. Weaning of piglets usually results in reduced villi length, while increased villi length is important because it increases intestinal surface area and therefore the capacity for uptake of nutrients. Start of the weaning phase with increased villi length is therefore beneficial for piglets to overcome the physiological changes.

Provided is therefore a food product, preferably feed supplement, comprising fat, protein and carbohydrate, wherein the ratio of fat:protein is between 2:1 and 32:1, preferably between 7:1 and 10:1, further comprising oleic acid and linoleic acid, wherein said oleic acid is present in an amount of 7-80 wt% of total solids, preferably 30-45 wt% of total solids and said linoleic acid is present in an amount of 7-80 wt% of total solids, preferably 30-45 wt% of total solids. Said food product preferably comprises sunflower oil as source of said oleic acid and linoleic acid. Further, said food product preferably comprises about 80-85 wt% total fat of total solids, 9-11 wt% total protein of total solids and 7-8 wt% total carbohydrates of total solids. A particularly preferred food product comprises oleic acid and linoleic acid each in an amount of 35-40 wt% of total solids.

Said food product further preferably comprises about 5% of saturated fat, which consists of C16 and C18 fatty acids. MUFA percentage in this preferred food product is about 11% and PUFA is about 33%.

In a particular embodiment, the invention provides a food product, preferably feed supplement, according to the invention comprising per 25 g of food product, preferably feed supplement, 12.48 g of sunflower oil, 0.60 g of sodium caseinate, 0.99 g of lactose, 0.95 g of pea protein and 9.82 g of water.

The food product, preferably feed supplement, of the invention further comprises protein and carbohydrates. Protein is preferably present in an amount of 5-20 wt% of total solids, more preferably 7-15 wt% of total solids, most preferably 8-12 wt% of total solid, such as about 10% of total solids. Any source of protein that is suitable for use in nutrition of a subject in accordance with the invention can be used in the food product according to the invention. Non-limiting examples are soy, egg, whey, casein, hydrolyzed protein and amino acids. Preferred sources of protein are sodium caseinate and pea protein. Carbohydrates are preferably present in an amount of 2-15 wt% of total solids, more preferably 4-10 wt% of total solids, most preferably 5-8 wt% of total solids, such as about 6.6 wt% of total solids. Any source of carbohydrates that is suitable for use in nutrition of a subject in accordance with the invention can be used in the food product according to the invention. Non-limiting examples are lactose, saccharose, maltodextrin, and starch. A preferred source of carbohydrates is lactose.

The food product of the present invention is suitable for stimulating or improving health of young subjects in the vulnerable period of weaning or after the period after birth. The food product of the present invention is particularly suitable for stimulating or improving health of young subjects in the vulnerable period of weaning. In particular, the food product of the invention stimulates growth, prevents the development of disease and/or reduces the incidence of disease and promotes intestinal health of the subject following weaning or following birth. Therefore, there is also provided a method for stimulating growth of a subject comprising administering to said subject a food product according to the invention, whereby said food product is preferably administered at least before weaning of said subject. Alternatively, for non-lactating young animals, such as birds, e.g. chickens, or animals that are separated from their mother directly after birth, such as calves, in particular calves of dairy cows, a food product according to the invention is provided to the young animal after birth, for instance together with their standard animal feed, because such animals are not subjected to weaning. In such case, the food product of the invention is for instance provided to a young animal during the first days or weeks after birth, depending on the type of animal. Said subject is preferably an animal, more preferably a mammal, such as a piglet or calf, or a chicken, most preferably a piglet. Said food product is preferably a feed supplement.

Also provided is a food product according to the invention for stimulating growth in a subject, preferably after weaning. Alternatively, for animals that are not subjected to weaning, growth is stimulated in a young animal after birth. Said subject is preferably an animal, more preferably a mammal, such as a piglet or calf, or a chicken, most preferably a piglet. Said food product is preferably a feed supplement. Alternatively, for animals that are not subjected to weaning, growth is stimulated in a young animal after birth. Said composition preferably comprises the ingredients of a food product according to the invention. Said composition preferably comprises medium chain triglycerides (MCT), preferably lauric acid, mono-unsaturated fatty acids (MUFA), preferably palmitoleic acid, and cholesterol, wherein said MCT are present in an amount of 15-80 wt% of total solids, said MUFA are present in an amount of 0.1-1.5 wt% of total solids and said cholesterol is present in an amount of 0.2-3.5 wt% of total solids. In another aspect said composition comprises oleic acid and linoleic acid, wherein said oleic acid is present in an amount of 7-80 wt% of total solids and said linoleic acid is present in an amount of 7-80 wt% of total solids. Said subject is preferably an animal, more preferably a mammal, such as a piglet or calf, or a chicken, most preferably a piglet. Said food product is preferably a feed supplement.

Further provided is a method for preventing disease in a subject comprising administering to said subject a food product according to the invention, whereby said food product is preferably administered at least before weaning of said subject. Alternatively, for animals that are not subjected to weaning, disease is prevented in a young animal after birth. Said subject is preferably an animal, more preferably a mammal, such as a piglet or calf, or a chicken, most preferably a piglet. Said food product is preferably a feed supplement.

Also provided is a composition comprising fat, protein and carbohydrate, wherein the ratio of fat:protein is between 2:1 and 32:1, preferably between 7:1 and 10:1, for use in preventing disease in a subject, preferably after weaning. Said composition preferably comprises the ingredients of a food product according to the invention. Said composition preferably comprises medium chain triglycerides (MCT), preferably lauric acid, mono-unsaturated fatty acids (MUFA), preferably palmitoleic acid, and cholesterol, wherein said MCT are present in an amount of 15-80 wt% of total solids, said MUFA are present in an amount of 0.1-1.5 wt% of total solids and said cholesterol is present in an amount of 0.2-3.5 wt% of total solids. In another aspect said composition comprises oleic acid and linoleic acid, wherein said oleic acid is present in an amount of 7-80 wt% of total solids and said linoleic acid is present in an amount of 7-80 wt% of total solids. Said subject is preferably an animal, more preferably a mammal, such as a piglet or calf, or a chicken, most preferably a piglet. Said food product is preferably a feed supplement.

Also provided is a food product according to the invention for preventing disease in a subject, preferably after weaning. Alternatively, for animals that are not subjected to weaning, disease is prevented in a young animal after birth. Said subject is preferably an animal, more preferably a mammal, such as a piglet or calf, or a chicken, most preferably a piglet.

Alternatively, for animals that are not subjected to weaning, disease is prevented in a young animal after birth. Said composition preferably comprises the ingredients of a food product according to the invention. Said composition preferably comprises medium chain triglycerides (MCT), preferably lauric acid, mono-unsaturated fatty acids (MUFA), preferably palmitoleic acid, and cholesterol, wherein said MCT are present in an amount of 15-80 wt% of total solids, said MUFA are present in an amount of 0.1-1.5 wt% of total solids and said cholesterol is present in an amount of 0.2-3.5 wt% of total solids. In another aspect said composition comprises oleic acid and linoleic acid, wherein said oleic acid is present in an amount of 7-80 wt% of total solids and said linoleic acid is present in an amount of 7-80 wt% of total solids. Said subject is preferably an animal, more preferably a mammal, such as a piglet or calf, or a chicken, most preferably a piglet. Said food product is preferably a feed supplement.

Further provided is a method for maintaining or improving intestinal health of a subject comprising administering to said subject a food product according to the invention, whereby said food product is preferably administered at least before weaning of said subject. Alternatively, for animals that are not subjected to weaning, a food product according to the invention is administered to the young animal after birth, for instance together with their standard animal feed. Said subject is preferably an animal, more preferably a mammal, such as a piglet or calf, or a chicken, most preferably a piglet. Said food product is preferably a feed supplement.

Also provided is a food product according to the invention for maintaining or improving intestinal health of a subject, preferably after weaning. Alternatively, for animals that are not subjected to weaning, intestinal health is maintained or improved in a young animal after birth. Said subject is preferably an animal, more preferably a mammal, such as a piglet or calf, or a chicken, most preferably a piglet. Said food product is preferably a feed supplement.

Alternatively, for animals that are not subjected to weaning, intestinal health is maintained or improved in a young animal after birth.Said composition preferably comprises the ingredients of a food product according to the invention. Said composition preferably comprises medium chain triglycerides (MCT), preferably lauric acid, mono-unsaturated fatty acids (MUFA), preferably palmitoleic acid, and cholesterol, wherein said MCT are present in an amount of 15-80 wt% of total solids, said MUFA are present in an amount of 0.1-1.5 wt% of total solids and said cholesterol is present in an amount of 0.2-3.5 wt% of total solids. In another aspect said composition comprises oleic acid and linoleic acid, wherein said oleic acid is present in an amount of 7-80 wt% of total solids and said linoleic acid is present in an amount of 7-80 wt% of total solids. Said subject is preferably an animal, more preferably a mammal, such as a piglet or calf, or a chicken, most preferably a piglet. Said food product is preferably a feed supplement.

As used herein, "stimulating growth" means that the growth of a subject that has been administered a food product according to the invention, preferably growth after weaning, is stimulated as compared to the growth of a subject that has not been administered such food product. Preferably, the average daily weight gain of the subject administered a food product according to the invention following the start of administration of the food product until and including the first day following weaning is higher as compared to the average daily weight gains of a subject that has not been administered the food product during the same number of days before weaning until and including the first day after weaning.

As used herein, "preventing disease" refers to the prevention of any occurrence of disease as well as a reduction in the occurrence of disease in a subject. Further, the incidence of disease in a subject that has been administered a food product according to the invention after weaning is preferably reduced as compared to the incidence of disease in a subject after weaning that has not been administered such food product. "After weaning" as used herein refers to the period immediately after weaning, for instance during 1-60 days following weaning, preferably 1-30 days following weaning. Hence disease is preferably prevented and/or the incidence of disease is preferably reduced at least within the period of 60 days following weaning, preferably at least the period of 30 days following weaning. The disease that is prevented can be any disease that may occur in a young subject around the time of weaning. Preferred, but non-limiting, examples of diseases that are prevented by administering a food product according to the invention are inflammation, in particular intestinal inflammation, anemia, micro-organismal and/or viral infections, in particular diarrhea and postweaning multisystemic wasting syndrome. In a preferred embodiment said disease that is prevented or of which the incidence is reduced is an infectious disease.

As used herein, "maintaining or improving intestinal health" means that the intestinal health of a subject that has been administered a food product according to the invention after weaning is maintained as compared to the intestinal health of said subject before weaning or that one or more adverse effects of weaning on intestinal health, such as an imbalance in the bacterial composition in the intestine, reduced villi length, intestinal inflammation and/or intestinal epithelial damage, are inhibited or at least in part prevented. Further, intestinal health of a subject that has been administered a food product according to the invention after weaning is preferably improved as compared to the intestinal health of a subject after weaning that has not been administered such food product. "After weaning" as used herein refers to the period immediately after weaning, for instance during 1-60 days following weaning, preferably 1-30 days following weaning. Hence intestinal health is preferably maintained or improved at least within the period of 60 days following weaning, preferably at least the period of 30 days following weaning. "Maintaining or improving intestinal health" preferably means that villi length in the intestine, preferably in the jejunum, is maintained or improved, and/or that intestinal inflammation, as for instance evidenced by the amount of IL-8 in blood, is prevented or reduced, the number of *streptococcus suis* bacteria in the intestines is reduced and/or the level of alkaline phosphatase in blood is reduced.

As used herein, a "subject" is a human or an animal. The term "animal" as used herein refers to livestock, farm animals, domestic animals, pet animals, and wild animals. Preferred animals that are treated in accordance with the invention with a food product are livestock animals, more preferably livestock mammals. As used herein the term, "livestock" refers to a domesticated animal held in an agricultural setting. The term includes, but is not limited to cattle, pigs, poultry, goats, sheep, horses, buffalo, llamas, donkeys and mules. In a further preferred embodiment said subject is a mammal. The food products and methods of the invention are particularly suitable for use in calves, piglets and young chickens. A "calf' as used herein refers to the young of domestic and/or farm cattle. Provided is therefore a food product in accordance with the invention that is a piglet food product piglet feed supplement, a calf food product or calf feed supplement or a chicken food product of chicken feed supplement.

In a particularly preferred embodiment the animal provided with a food product or feed supplement in accordance with the invention is a piglet and a food product or feed supplement in accordance with the invention is a piglet food product. Any pig breed or crossbreed that is used in livestock or as farm or domestic animal can be advantageously treated with a food product or feed supplement of the invention. Non-limiting examples of such pig breeds that are advantageously treated with a food product or feed supplement of the invention are Duroc, Large White or Large English White, Landrace, such as Dutch Landrace, German Landrace, Danish Landrace, English Landrace and Finnish Landrace, Yorkshire, German Pietrain, Belgian Pietrain, Iberico, (Romanian) Mangalitsa, and Bentheim Black Pied. In a preferred embodiment a pig provided with a food product or feed supplement of the invention is a pig from a large litter. A "large litter" as used herein refers to a litter of at least 10 piglets, preferably at least 11 piglets, more preferably at least 12 piglets, most preferably at least 13 piglets.

In another aspect, the food product is used to supplement the diet of human infants, in particular breastfed human infants or formula-fed human infants before the infants are weaned. A food product of the invention is for instance advantageously administered to premature infants, e.g. to help prevent necrotizing enterocolitis. Provided is therefore a food product in accordance with the invention that is a human infant food product. Further provided is a method or use of the invention, wherein the subject is a human infant, preferably a premature human infant. As used herein the term "premature infant" refers to an infant born prior to the end of a normal gestational term. In particular it refers to an infant born before 36 weeks of gestation. Preferably, a method or use of the invention wherein the subject is a human infant, preferably a premature human infant, is provided for preventing diseases, more preferably for preventing necrotizing enterocolitis.

In another aspect, a food product of the invention is used to supplement the diet of young chickens. In another aspect, a food product of the invention is used to supplement the diet of young chickens. Most of the chickens that do not survive after birth die around three days of age. Hence, chickens are preferably provided with the food product in the first period directly after birth. Preferably, the food product of the invention is provided to chickens during the first 6 weeks following birth, more preferably during the first 2 weeks following birth, more preferably during the first week following birth, more preferably during days 0-5 following birth or during days 0-3 following birth. As used herein the term days 0-5 following birth refers to the period including the day of birth up to and including the fifth day after birth.

A food product, preferably feed supplement, according to the invention is preferably administered to a subject or animal at least before weaning of said subject or animal. Preferably, said food product is administered to a subject or animal, preferably a piglet, from at least one day before weaning said subject until the day of weaning said subject or animal, preferably including the day of weaning. Preferably said food product is administered daily from at least three days, more preferably at least four days, more preferably at least five days before weaning said subject or animal, preferably a piglet, until the day of weaning said subject or animal, preferably including the day of weaning.

Administration of the food product of the invention to the subject or animal may be continued after weaning of the subject or animal, for instance for up to 1, 3, 5, 10 or 30 days following weaning. Hence, a food product according to the invention is for instance administered daily to a subject or animal, preferably a piglet, from at least one day, preferably at least three days, more preferably at least five days before weaning said subject until 1, 3, 5, 10 or 30 days following weaning said subject or animal. If administration of the food product is continued after weaning the food product is for instance added to the animal feed. Provided is therefore also an animal feed comprising a food product, preferably a feed supplement, according to the invention. Said animal feed is preferably a pig feed, a chicken feed or a cow or calf feed, or an infant formula.

A food product according to the invention is preferably administered to the subject in an amount that is sufficient to stimulate growth, to prevent disease or reduce the incidence of disease and/or to maintain or improve intestinal health. The specific amount depends on the type of subject or animal that is provided with the food product. For instance, piglets are preferably provided with between 10 and 20 grams per day of the food product, such as about 15 grams per day (wt% of total solids of the food product). Chickens are preferably provided with between 5 and 10 grams per day of the food product, such as about 7 or 8 grams per day (wt% of total solids of the food product). Calves are preferably provided with between 50 and 100 grams per day of the food product, such as about 75 grams per day (wt% of total solids of the food product).

A food product according to the invention comprising medium chain triglycerides (MCT), preferably lauric acid, mono-unsaturated fatty acids (MUFA), preferably palmitoleic acid, and cholesterol, is preferably administered in a daily dose containing 2-15 g of said MCT, preferably lauric acid, 20-250 mg of said MUFA, preferably palmitoleic acid, and 0.03-0.5 g of said cholesterol, preferably to a piglet, in a method of the invention for stimulating growth, preventing disease or reducing the incidence of disease and/or maintaining or improving intestinal health. Hence, a preferred method of the invention comprises administering to a piglet a food product comprising lauric acid, palmitoleic acid, and cholesterol, wherein lauric acid is administered in a daily dose of 2-12 g, palmitoleic acid is administered in a daily dose of 20-250 mg and said cholesterol is administered in a daily dose of 0.03-0.5 g. Preferably, lauric acid is administered, preferably to a piglet, in a daily dose of 3-10 g, more preferably 4-8 g, most preferably 5-6 g, such as about 5.4 g or about 5.5 g. Further, palmitoleic acid is preferably administered, preferably to a piglet, in a daily dose of 30-200 mg, more preferably 40-150 mg, more preferably 60-120 mg, more preferably 70-100 mg, most preferably 75-90 mg, such as about 83 mg or about 85 mg. Cholesterol is preferably administered, preferably to a piglet, in a daily dose of 0.03-0.5 g, preferably 0.05-0.4 g, more preferably 0.07-0.25 g, more preferably 0.08-0.15 g, most preferably 0.09.0.13 g, such as about 0.1 g, 0.11 g or 0.12 g. Further, said food product preferably comprises oleic acid and linoleic acid. Said oleic acid is administered, preferably to a piglet, in a daily dose of 0.1-3 g, preferably 0.3-1.5 g, more preferably 0.45-1 g, more preferably 0.55-0.75 g, most preferably 0.6-0.7 g, such as about 0.65 g, about 0.66 g, or about 0.67 g. Said linoleic acid is administered, preferably to a piglet, in a daily dose of 0.05-1 g, preferably 0.07-0.7 g, more preferably 0.09-0.4 g, most preferably 0.1-0.25, such as about 0.14 g, about 0.15 g or about 0.16 g. Said food product is preferably a feed supplement.

A food product according to the invention comprising oleic acid and linoleic acid, is preferably administered in a daily dose containing 1-12 g of said oleic and 1-12 g of said linoleic acid, preferably to a piglet, in a method of the invention for stimulating growth, preventing disease or reducing the incidence of disease and/or maintaining or improving intestinal health. Hence, another preferred method of the invention comprises administering to a piglet a food product comprising oleic acid and linoleic acid, wherein said oleic acid is administered in a daily dose of 1-12 g and said linoleic acid is administered in a daily dose of 1-12 g. Preferably oleic acid and linoleic acid are each administered, preferably to a piglet, in a daily dose of 3-10 g, more preferably 4-8 g, most preferably 5-6.5 g, such as about 5.6 g, about 5.7 g, or about 5.8 g. Said food product is preferably a feed supplement.

A food product or feed supplement according to the invention can be administered in any manner known in the art for feeding young subjects or animals at an age that they are typically weaned. For instance, pigs are typically weaned at an age of between 15 and 30 days after birth. Calves of dairy cows are separated from their mother directly after birth, but calves of beef cows are typically weaned at an age of approximately 10 months after birth. As described herein before, for non-lactating young animals, such as birds, e.g. chickens, or animals that are separated from their mother directly after birth, such as calves, in particular calves of dairy cows, a food product according to the invention is provided to the young animal after birth, for instance together with their standard animal feed, because such animals are not subjected to weaning.

Preferably the food product of the invention is administered to a subject or animal orally, for instance as a liquid or viscous composition, such as a solution, dispersion or emulsion. Oral administration of the food product is for instance done using a drinking bottle, tube, or is provided to young animals in a feeding trough. Preferably, a food product or feed supplement according to the invention is provided so that voluntary intake of the food product or feed supplement is achieved, e.g. by providing the food product or feed supplement in a feeding through, optionally mixed with regular animal feed. If the subject provided with a food product of feed supplement of the invention is a pig, the product or supplement is preferably provided in a pig trough. If the subject provided with a food product of feed supplement of the invention is a chicken, the product or supplement is preferably provided mixed with the regular chicken feed. If the subject provided with a food product of feed supplement of the invention is a calf, preferably a calf of a dairy cow, the product or supplement is preferably provided mixed with the regular calf feed, e.g. calf milk. If the food product or feed supplement is mixed with a regular diet, for instance with chicken feed or if administration of the food product is continued after weaning of a subject or animal, it can for instance be mixed in solid and/or dry form with solid or semi-solid animal feed.

The invention will be explained in more detail in the following, non-limiting examples.

### Brief description of the drawings

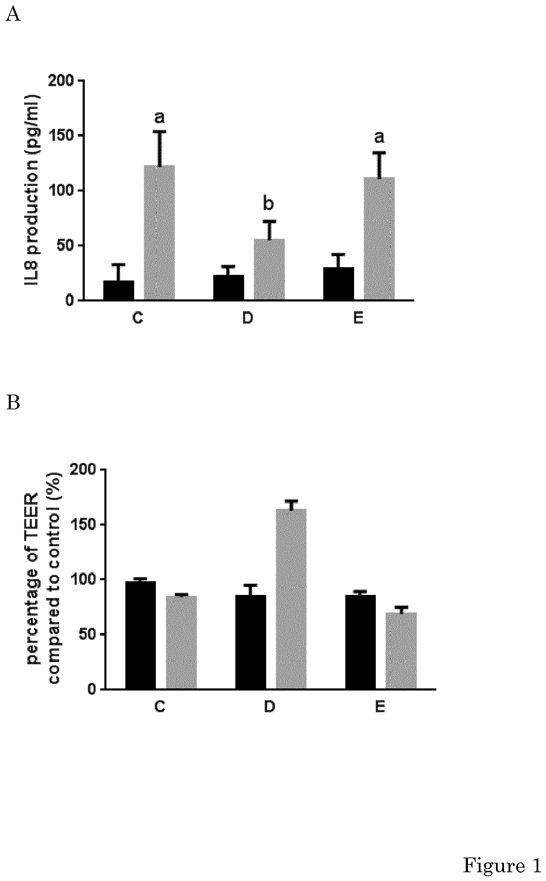

Figure 1: The effect of control (C), Y-D-Fix (D) or Ennovy (E) on IL8 production (Fig. 1A) and TEER (Fig. 1B) *in vitro.* Black bars represent solvent controls, grey bars represent 4.2 µM DON incubated Caco-2 cells. Different letters indicate significant differences with p<0.05. Caco-2 cells were incubated as stated in the materials and methods section with DON or solvent only. 2 hours previously, digested water (C), Y-D-Fix (D) or Ennovy (E) was added. IL8 production was analyzed apically and basolaterally, but only an effect of DON and digests was visible at the apical side of the cells. Effects on basolateral side are not shown.

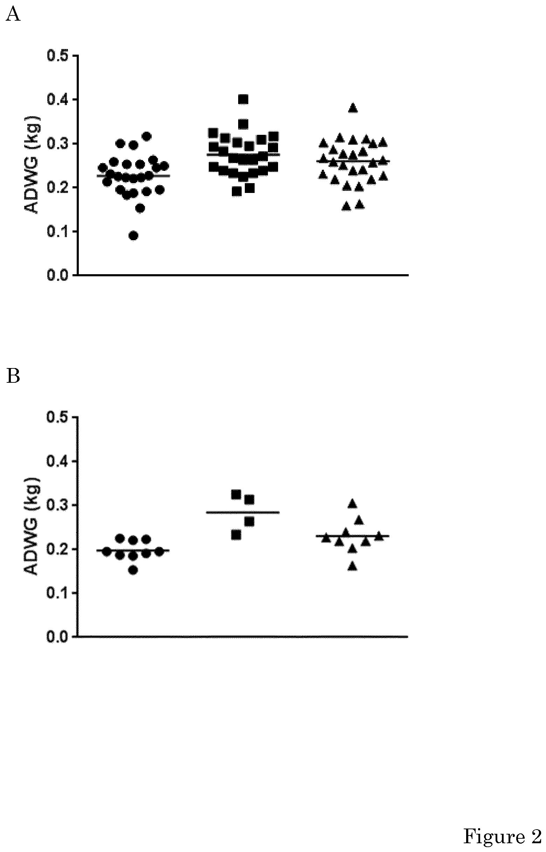

Figure 2: The average daily weight gain (ADWG) during the five consecutive days of administration of Y-D-Fix or Ennovy or water. Panel A; the ADWG in the control group (circles), the Y-D-Fix treated group (squares) and the Ennovy treated group (triangles). Different letters indicate significant differences with p<.05. Panel B shows the ADWG in the lightest tertile of animals at the start of the experiment (day 21).

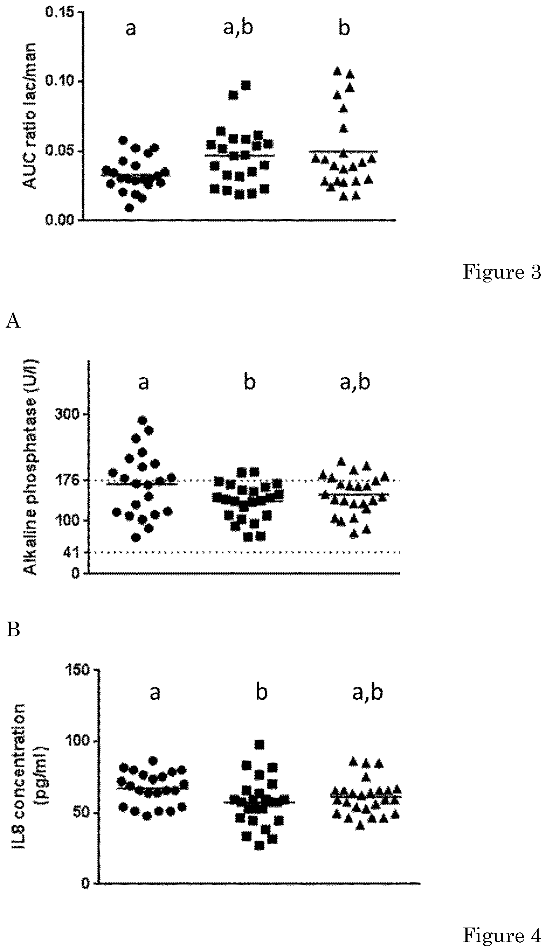

Figure 3: The ratio of AUC of lactulose and mannitol in plasma, corrected for body weight. Water treated group (circles), the Y-D-Fix treated group (squares) and the Ennovy treated group (triangles). Different letters indicate significant differences with p<0.05. Lactulose and mannitol were administered as stated in the materials and methods section 12 hours after start of weaning. Directly previously to this administration, a blood sample was drawn, as well as six times during the 36 hours after start of weaning.
Figure 4: Alkaline phosphatase activity (panel A) and IL8 expression (panel B) in plasma. Circles represent water control group, squares represent Y-D-Fix group, triangles represent Ennovy group. Normal physiological range (lower [41 U/l] and upper [176 U/l]) of aPhos is indicated between dashed lines. APhos activity in plasma was analyzed right before weaning.

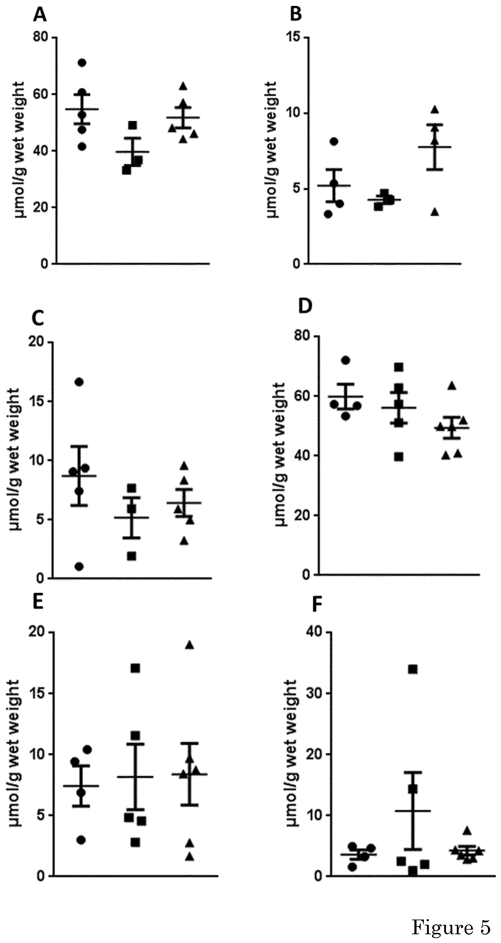

Figure 5: Concentrations of short chain fatty acids in feces. Panel A, B, C pre-weaning, panel D, E, F post-weaning. Panel A, D, acetic acid, panel B, E propionic acid, panel C, F butyric acid. Circles: water control C; squares: Y-D-Fix, triangles: Ennovy. Data are represented as amounts per group and as average (±SEM) of all groups with the same treatment.

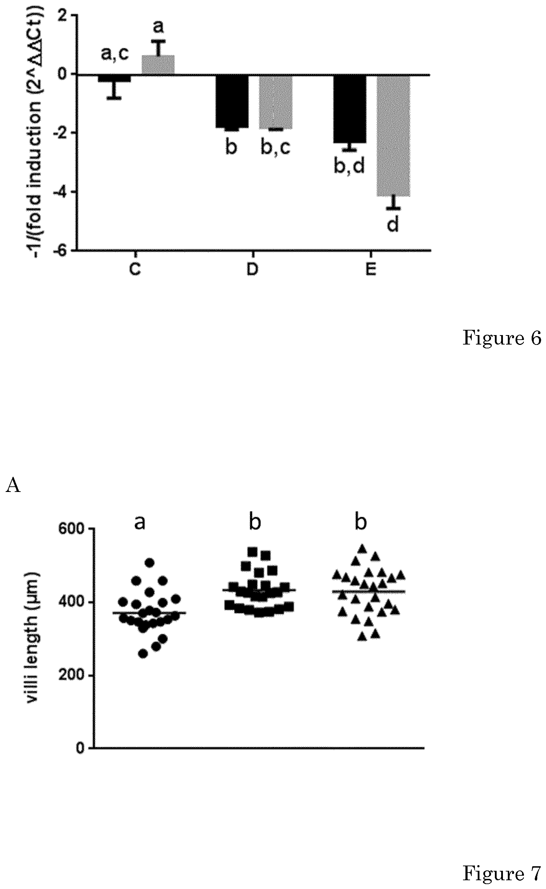

Figure 6: *Streptococcus suis* content of stool samples as compared to total bacteria and to water control group C. Black bars: before weaning, grey bars: after weaning. C - water control group, D - Y-D-Fix group, E - Ennovy group. Different letters indicate significant differences.

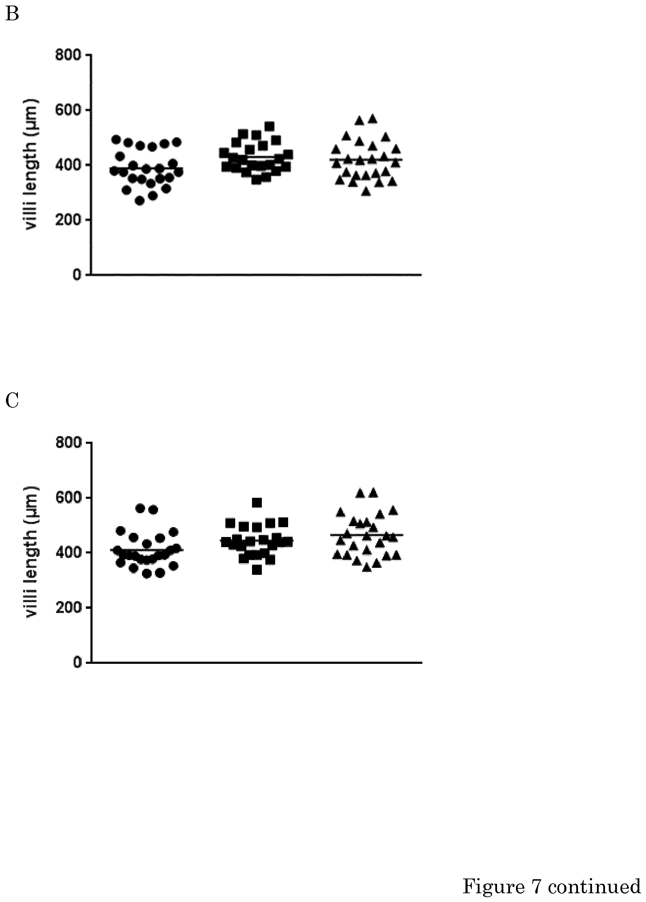

Figure 7: Villi length of intestinal epithelium. Panel A: villi length of mid jejunum (2.75 m from stomach pylorus), panel B: villi length of proximal jejunum (0.5 m from stomach pylorus), panel C: villi length of duodenum (0.1 m from stomach pylorus). Circles represent water control group, squares represent Y-D-Fix group, triangles represent Ennovy group.

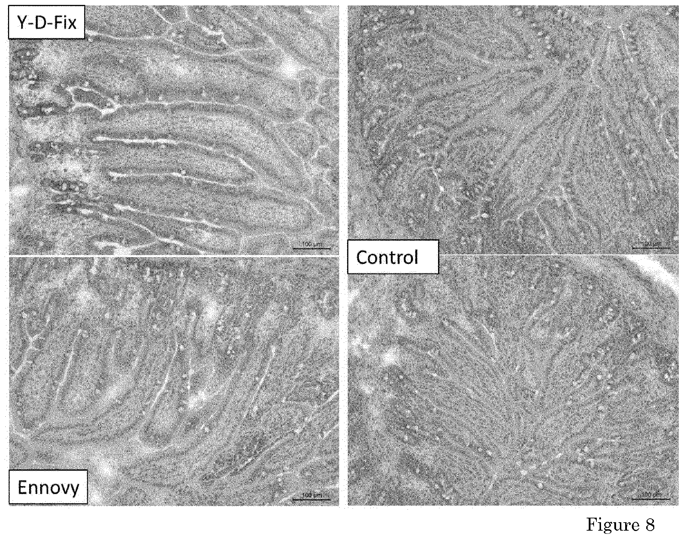

Figure 8: Histological examination of villi length after Y-D-Fix, Ennovy or water control mid jejunum (2.75 m from stomach pylorus).

### Examples

### Materials and methods

### In vitro experiments

### Cell culture (IPEC-J2 and Caco-2)

Intestinal porcine epithelial cells (IPEC-J2 passages 83 - 87) were a kind gift from prof. R. Pieters (IRAS, Utrecht University, The Netherlands). IPEC-J2 cells were cultured in 25 cm² cell culture flasks (Greiner Bio-One, Alphen a/d Rijn, The Netherlands) in Dulbecco's modified Eagle's medium (DMEM)/ Ham's F12 supplemented with 10% fetal bovine serum, penicillin (100 U/mL) and streptomycin (100 *µ*g/mL) (Gibco, Life Technologies Europe, Bleiswijk, The Netherlands). IPEC-J2 cells were used for MTT analysis.

Caco-2 cells were cultured in minimal essential media (MEM), supplemented with 10% FBS, 1% non essential amino acids (NEAA), 1% pyruvate, penicillin (100 U/mL) and streptomycin (100 *µ*g/mL), all from Gibco (Life Technologies Europe, Bleiswijk, The Netherlands). Experiments with Caco-2 cells were conducted with cells grown on sterile 0.3 cm2 transwell with 0.4 µm pore polyester membrane inserts placed in a 24-well plate (Corning, Sigma-Aldrich, The Netherlands), if not stated otherwise. The cells were seeded at a density of 1 * 10⁵ cells per insert. The cell culture plates were incubated at 37°C, in a humidified atmosphere with 5% CO₂. After 21 days of culture a confluent monolayer was achieved with a transepithelial electrical resistance (TEER) exceeding 500 Ω˙cm² measured by a volt-ohm meter (EVOM2, Epithelial Voltohmmeter, World Precision Instruments). The cell culture was regularly tested and found to be free of mycoplasma contamination.

### MTT assay

To confirm lack of cytotoxicity at 4.2 µM of DON as published previously by Akbari *et al.* (The FASEB Journal 204; 28, 2414-2429), an MTT assay using IPEC-J2 cells was performed in a 96-well plate. The MTT assay assesses cell viability by analyzing the capability of cells to reduce the tetrazolium dye MTT (3-(4,5-dimethylthiazol-2-yl)-2.5-diphenyltetrazolium bromide, Sigma Aldrich, Zwijndrecht, The Netherlands) into the purple colored formazan. Using colorimetric analysis, the cell viability is quantified. For the MTT assay, a 5 mg/ml MTT-stock was prepared in PBS and this was diluted six times in 10% FBS in medium. Supernatant was aspirated and cells were incubated with 100 µl of the MTT solution. This was incubated for 3 hours in the incubator. After that, medium was aspirated and 100 µl DMSO was added to the cells. Plate was shaken at low intensity for ten minutes and absorption at 560 nm was measured using spectrophotometer (Fluostar Omega, BMG Labtech).

### TEER measurements

Caco-2 cells were cultured as described above. The integrity of the monolayer was evaluated on a regular basis using the first two 24-well plates during 21 days. To avoid contamination, in the next well plates, TEER was only measured right before the start of the experiment. On average, TEER values for untreated cells were 550 ± 24 Ω˙cm2. The cells were challenged by addition of deoxynivalenol 4.2 µM to the apical and basolateral side in cell culture medium as was described previously by Akbari et al. (The FASEB Journal 204; 28, 2414-2429).

### Interleukin-8 production

Caco-2 and IPEC-J2 cells were grown on inserts and in 12 well plates respectively. Confluent layers of cells were incubated with 1:100 dilutions of digests 2 hours prior to addition of DON. Cells were then incubated in the presence of both digests and DON for 24 hours prior to analysis. TEER was measured as described above. Interleukin-8 (IL-8) was analyzed using porcine CXCL8/IL-8 DuoSet ELISA kit (DY535, R&D systems Abbingdon, UK) according to the manufacturer's protocol. Apical an basolateral supernatant of transwell plates were used for analysis. Samples were diluted ten times in PBS.

### DON solution

Deoxynivalenol (DON, Sigma Aldrich, Zwijndrecht, The Netherlands) was prepared as a 5 mM stock solution in 96% ethanol and this was stored at -20°C.

### In vitro digestion of supplements

Y-D-Fix and Ennovy were digested *in vitro* based on previously published protocol (Hollebeeck et al. Food Chem. 2013;138(2-3):1936-44). In summary, the following protocol for the digestion of the supplements was used. Stomach juice was prepared by adding 175 mg NaCl, 110 mg KCl, 110 mg CaCl2, 113.7 mg pepsin and 1.12 mg lipase to 1000 ml demineralized water. pH was adjusted to 3 using 1 M HCl, and enzymes were added just before use. Small intestinal juice was prepared by adding 1.25 g NaCl, 150 mg KCl, 55 mg CaCl2, 1.487 g pancreatin (80 mg pancreatin/g protein) and 11.143 g bile (60 mg bile/g protein bovine bile extract) to 1000 ml sterile demineralized water. The pH was adjusted to pH 6.5 using 1 M NaHCO₃. Lipase (100-400 U/mg protein), pepsin, pancreatin and bile were from Sigma Aldrich, Zwijndrecht, The Netherlands. Phosphate buffer (0.1 M, pH 6.5) was prepared by dissolving 828 mg NaH₂PO₄.H₂O and 712 mg Na₂HPO₄.2H₂O in 100 ml demineralized water. The pH was adjusted to pH 6.5 using HCl. All solutions were warmed to 37°C before use. 0.2 g of testing sample was weighed in a 50-ml test tube. 5 ml stomach juice including enzymes was added and this was incubated for 60 minutes at 37°C in an orbital shaker. After that, pH was adjusted to 6.5 by addition of 1 M NaHCO₃ and 10 ml small intestinal juice including enzymes was added as well as 0.5 ml phosphate buffer. This was incubated at 37°C for 3 hours in an orbital shaker, and 1 hour at 37°C in a water bath. The pH was then adjusted to 7.4 and 1 ml of the digested samples was incubated for 10 minutes at 90°C to inactivate enzyme activity. Those samples were then used in a 1:100 dilution into cell culture medium.

### Experimental design of clinical trial and pig care

### Experimental design

The study was performed to compare the efficacy of food product Y-D-Fix to Ennovy and to water C.

### Animals

Piglets were born at the testing facility. Dams (English Landrace x English Large White, average age 3.1 years) arrived at the testing facility approximately 10 days before expected farrowing. Sows had delivered at least 5 times previously. Average litter size on the farm of origin was 13.8. Sows were housed in farrowing stables in the animal testing facility according to the European Guidelines for Housing of Testing Animals. The temperature at the testing facility was on average 21.8°C. The sows had unlimited access to drinking water and the feeding regimen was as they were fed until arrival at the testing facility. Food intake and health status of the sows was monitored and registered daily. Sow's were administered twice daily 1.2 kg of feed ("Dracht": code 3053, De Heus Animal Nutrition BV, Ede-Wageningen, The Netherlands). After delivery, sows received thrice daily feed ad libitum to a maximum of 7 kg per day ("Lacto": code 3079, De Heus Animal Nutrition BV, Ede-Wageningen, The Netherlands). The farm of origin was specific pathogen free (SPF).

Testing animals were born without need of veterinary birth aid. Litter size was on average 14.8 live born piglets. Piglets had access to a heating lamp under which temperature was constantly 30 - 32°C. At the day of birth, piglets received an ear mark with an identification number, and were weighed. At the third day of life, they received an intra-muscular injection of 1 ml Iron-ject 20%+B12 (Dopharma, Raamsdonksveer, The Netherlands) behind the ear and were weighed. Piglets had access to two drinking nipples, apart from the drinking nipple from the sow. Piglets were not offered creep feed, as consumption per piglet could not be monitored decently, and consumption could influence the outcomes of the trial. Piglets were monitored daily and the ones that failed to thrive were excluded from the trial. At the start of the experiment 74 piglets were included. 24 in Y-D-Fix group, 24 in Ennovy group and 26 in control group C. 36 piglets were male, 41 were female. Male : female in Y-D-Fix was 13 : 14, in Ennovy 13 : 13 and in the control group 11 : 14.

### Observations of general health, clinical signs and mortality

From day 1 of life of the piglets, health was monitored on the following criteria: diarrhea, failure to thrive, swollen joints, unsteady pace, lameness, pneumonia, omphalitis, sudden death. Sudden death was always preceded by one or several days failure to thrive. Three animals were euthanized as a consequence of severe failure to thrive.

### Randomization and treatment

On day 19 and 20 piglets were familiarized with the stomach probe and handling, using 30 ml of lukewarm water. From day 21 of age until day 25, piglets received either one of three treatments: Y-D-Fix, Ennovy or water (control group C). Piglets were assigned to one of three treatments randomly, whereby each litter was divided into three groups. Gender was divided as evenly as possible over the groups. At day 25, piglets were weaned and placed in separate pens per group (on average 4 animals per pen, minimally 2, maximally 6 animals per pen), which were sized 60 x 150 cm. At day 26 of life, Y-D-Fix, Ennovy or water was administered for the final time, preceded by a lactulose-mannitol mixture.

### Specification of treatments

Y-D-Fix consisted of a 510 kJ mixture of coconut oil, egg yolk powder, sea buckthorn oil, sodium-caseinate and lactose. Ennovy consisted of a 510 kJ mixture of sunflower oil, pea protein, sodium-caseinate (Na-Cas EM7) and lactose. Exact compositions per treatment are stated in Table 1. Water control C was plain water. Ennovy is a composition not according to the invention.

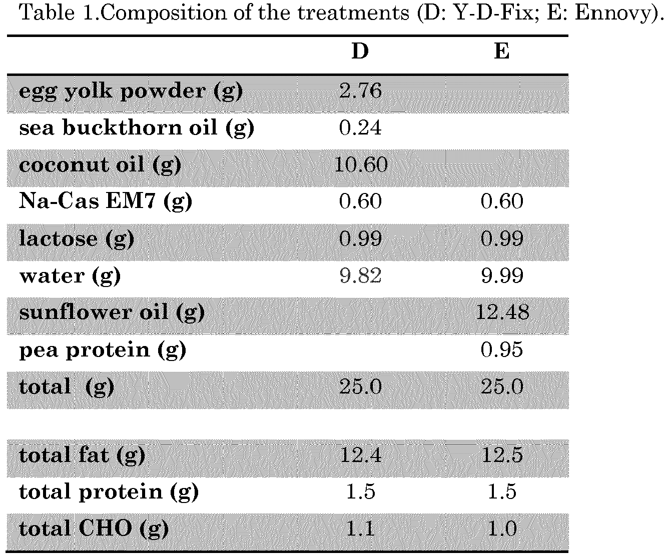

As Y-D-Fix had an intense yellow to orange color, a colorant (Wilton icing color golden yellow, Wilton Industries, Woodridge, IL 60517, USA) was used to assure blinding of the researchers. Both treatments contained 50% of fat, 6% protein and 4% carbohydrate (CHO). The dose used was 25 g and this was administered to the animals by stomach gavage (Dog Catheter with Female Luer Mount 3.3 mm OD x 60 cm).

### Ingredients of supplements

Egg yolk solution was from Adriaan Goede BV (Landsmeer, The Netherlands). Sodium caseinate excellion 7 (EM7) was from FrieslandCampina DMV (Veghel, The Netherlands). Coconut oil was from Henry Lamotte Oils GmbH (Bremen, Germany). Pea protein was from Rawfood Vena (Apeldoorn, The Netherlands). Sea buckthorn oil was from Anthémis Aromatherapie (Oosterstreek, The Netherlands). Sunflower oil was from Albert Heijn (Zaandam, The Netherlands). Lactose was from FrieslandCampina DOMO (Amersfoort, The Netherlands).

Supplements were stabilized by Ultra Turrax. For Ennovy, all ingredients were mixed at room temperature and turraxed for 10 minutes at 8000/min. For Y-D-Fix, coconut oil was fluidized in a water bath at 50°C. Egg yolk solution was prepared by mixing 221 g egg yolk powder to 785 ml water by turraxing. 48 g EM7 and 79 g lactose were added. 19 g sea buckthorn oil was added to the 848 g fluidized coconut oil. This was mixed to the egg yolk solution by turraxing for 10 minutes at 8000/min. Viscosity of Ennovy was low, but of Y-D-Fix was high. Both treatments were pasteurized in a water bath for 10 minutes at 72°C and aliquots were stored in 10 ml syringes to facilitate administration.

### Lactulose mannitol

Lactulose syrup was from Centrafarm Services B.V., Etten-Leur, The Netherlands, and contained 500 mg per g syrup (670 mg/ml). 12 ml syrup was used per piglet, which corresponded to 8 g, which contained 4 g lactulose. Mannitol (>98% D-mannitol) was from Sigma-Aldrich (Zwijndrecht, The Netherlands). Lactulose and mannitol were mixed right before use and stored in aliquots of 1 dose in 50 ml syringes to facilitate administration. Lactulose-mannitol mixture was administered by gavage, which was followed by the final administration of test product or water, to prevent loss of lactulose and mannitol that remained in the void volume of the gavage.

### Blood sampling

Blood samples were drawn from the vena cava cranialis using Venoject blood sampling system, with needle 20Gx1.5, in heparin coated tubes (BD Plymouth, UK, LH 68 IU, REF 3688884) and EDTA coated tubes (BD Plymouth, K2E 7.2 mg, REF 368861). Immediately after blood samples were drawn, they were centrifuged at 4°C, 3600 rpm for 10 minutes, and plasma was transferred to -80°C until further analysis. A blank blood sample was drawn right before transfer of the animals to the piglet pens. This was the start of the experiment. After an overnight fast, second blood sample was drawn and after that, Y-D-Fix, Ennovy or water control C was administered preceded by lactulose-mannitol mixture. Next blood samples were drawn after 2 hours, 4 hours, 8 hours, 12 hours and 24 hours.

### Serum analyses

Alkaline phosphatase activity in heparin serum was analyzed using (colorimetric) Alkaline Phosphatase Assay kit (ab83369) from Abcam (Cambridge, UK), according to the manufacturer's protocol. Interleukin-8 (IL-8) was analyzed using porcine CXCL8/IL-8 DuoSet ELISA kit (DY535, R&D systems Abbingdon, UK) according to the manufacturer's protocol. Lactulose and mannitol were analyzed in EDTA serum, using HPLC-MS-MS. While shaking the sample tubes, containing 250 µl of plasma, 1000 µl of acetonitrile was added. The tubes were placed in ice-water for 15 minutes and centrifuged. Afterwards, the supernatant was transferred into a clean LC vial. The samples were injected on a UPLC column, at a flow rate of 0.400 ml/minute, using a water gradient. The temperature of the column oven was 60°C and the injection volumes were 10 µl. The sample tray of the chromatographic system was cooled to approximately 4°C. An analytical stainless steel column, 150 x 2.1 mm ID, BEH AMIDE, particle size 1.7 µm (Waters, Etten-Leur, The Netherlands) and a pre-filter, 0.2 µm were used. The mobile phase consisted of a mixture of 950 ml of acetonitrile and 50 ml of 10 mM ammonium buffer pH 9 (A) and a mixture of 950 ml of 10 mM ammonium buffer pH 9 and 50 ml of acetonitrile (B). The mobile phase was filtered and degassed using a vacuum manifold (Millipore, Amsterdam, The Netherlands) equipped with a 0.10 µm filter (HVLP, Millipore, Amsterdam, The Netherlands). A triple-quadrupole MS was operated in negative ion mode, using an electro spray interface with N2 as drying gas. The protonated molecular ion of mannitol (m/z = 181) and the protonated molecular ion of lactulose (m/z = 341) were fragmented by collisional activated dissociation using argon. For quantification, the fragments m/z 89 and m/z 101 were detected in MS2 for mannitol and the fragments m/z 161 and m/z 101 were detected in MS2 for lactulose.

### Feces collection

Feces were collected per treatment group immediately after weaning (within the first two hours), 12, 14, 16, 20, 24 and 36 hours after start of weaning phase. Feces were aliquoted and stored at -80°C until further use.

### Analysis of Streptococcus suis content in feces

DNA was extracted using QIAGEN mini-stool kit, according to the manufacturer's protocol (Qiagen N.V., Venlo, The Netherlands). Primers for *Streptococcus suis* were forward CCAAAGCTTCATGACTGAATTGC and reverse CGACCACCGACACCGATG. Primers for total bacteria were forward GCAGGCCTAACACATGCAAGTC and reverse CTGCTGCCTCCCGTAGGAGT. Primers for lactobacilli were forward GCAGCAGTAGGGAATCTTCCA and reverse GCATTTCACCGCTACACATG.

### Analysis of short chain fatty acids (SCFA's) in feces

The extraction of the SCFA's was performed by weighing approximately 100 mg of feces precisely (wet weight) into a glass tube and dissolving this in 1 ml demineralized water. A concentration curve was prepared by dissolving 0 to 10 µmol acetate, propionate and butyrate in 1 ml water. Approximately 200 mg of NaCl was added, as well as 0.1 ml 6 M HCl. 3 ml dichloromethane was added to each sample after which the samples were vortexed and centrifuged for 3 min. at 3000 rpm. The lower layer was transferred to a new glass tube, and the feces were extracted with another 2 ml dichloromethane. This was vortexed, centrifuged and the lower layer was added to the previous organic layer. After that, the feces were extracted with 1 ml hexane, vortexed and centrifuged and the upper layer was added to the dichloromethane. The combined organic layer was than re-extracted with 1 ml and 0.5 ml respectively of 0.1 M NaHCO₃. The feces were spiked with acetate, propionate and butyrate before and after the first extraction with organic solvents, and after the second extraction with NaHCO₃ to estimate extraction efficiencies.

### Histological analysis

36 hours after the start of the experiment the pigs were euthanized, by i.v. injection of 5 ml Euthesate (Dopharma, Raamsdonksveer, The Netherlands) in the vena cava cranialis. The small intestines were removed immediately after sacrifice of the animals. Three specimens were excised, i. at 10 cm after the stomach pylorus (duodenum), ii. at 50 cm after the stomach pylorus (proximal jejunum) and iii. at 2.75 m after the stomach pylorus (mid-jejunum). These whole intestinal wall samples of ∼3 cm each were rinsed in PBS and folded several times to permit a complete microscopic examination. After that, the material was snap-frozen in liquid nitrogen and stored at - 20°C until further use. 10 µm section were cut at 3 - 4 sections per specimen and those sections were stained with hematoxylin and eosin (H&E) according to standard protocols. Photomicrographs were taken with an Olympus BX60 microscope, with a 425C Leica camera with LAS (Leica) software. The analysis of villi length was performed on 20 randomly selected villi per specimen. A computerized microscope based image analyzer (Image J) was used to determine length of the villi. Analyses were performed at Utrecht University, Faculty of Veterinary Science, Department of Biochemistry and Cell Biology, Center for Cell Imaging (CCI).

### Body weight

Study animals' weight was assessed on day 1 and 3, and then daily, from day 19 until transfer to the experimental unit and after on day 26 and 27.

### Statistical analysis

Statistical analysis were performed using SYSTAC for WINDOWS, version 13.00.05 and GraphPad Prism version 5.0 (GraphPad, La Jolla, CA, USA). Results are expressed as mean ± SEM. Differences between means were analyzed using one way ANOVA with Dunnett post-test. Differences were considered significant when p<0.05. Values from the clinical data that had a deviation from average ≥ 2.00 x coefficient of variation were considered outliers and were excluded from analysis. D'Agostino and Pearson omnibus normality test was performed to assess normal distribution of the data.

### Results

### Effects of DON and supplements on TEER and IL-8 production in vitro

Direct cytotoxicity of DON was determined previously by Akbari et al. (The FASEB Journal 204; 28, 2414-2429), who showed that DON was not cytotoxic at a concentration of 4.2 µM. We confirmed those results in IPEC-J2 cells using MTT assay (data not shown). As was shown by Akbari *et al.,* DON reduced TEER at a concentration of 4.2 µM for 24 hours by ∼80%. In our model, TEER was decreased by DON by only 15% as compared to control. However, pre-incubation with digested supplements increased TEER by 140 - 163% as compared to control after incubation with DON (figure 1B). Next to an increase in TEER by the digested Y-D-Fix and Ennovy, those composition decreased DON induced IL8 excretion significantly (figure 1A). After 24 h incubation, IL8 was induced by 4.2 µM DON six times, from 17.3 pg/ml to 121.7 pg/ml. This increase was reduced by the digested Y-D-Fix to 55.0 pg/ml as is shown in figure 1A.

### Effects of Y-D-Fix and Ennovy on growth of piglets in vivo

As stated in the materials and methods section, the growth of piglets was estimated daily during the five consecutive days pre-weaning concomitantly with administration of the compositions or water control. The results of the average daily weight gain (ADWG) in the total group as well as in the lightest tertile are shown in figure 2. In all piglets, the ADWG of the Y-D-Fix supplemented group was on average (±SEM) 270 g ± 8 g, whereas the ADWG of the Ennovy treated piglets was 550 ± 8 g. The ADWG of the water supplemented piglets was 550 ± 8 g. In the lightest tertile, ADWG of water group was on average (±SEM) 198 g ± 8 g, Y-D-Fix group 285 g ±22 g, Ennovy group 231 g ± 13 g. The ADWG was significantly increased in the Y-D-Fix treated group, but this effect was biggest in the lightest tertile of piglets at the start of the supplementation on day 21.

### Effect on intestinal permeability as determined by lactulose-mannitol addition

Lactulose and mannitol are both sugars that are not prone to digestion by the metabolic system. Those sugars are commonly used as a model for intestinal function and normal permeability. Mannitol is considered to be taken up from the intestines using a passive transport system. Lactulose is unable to pass the intestinal lining and only in compromised intestines, the lactulose concentration in plasma is expected to be increased. The ratio of lactulose to mannitol is therefore considered an adequate measurement for intestinal integrity. In our experiment, over time, blood samples were drawn, which enables us to determine areas under curve (AUC's) for lactulose and mannitol. The ratios of AUC's corrected for body weight are shown in figure 3. AUC ratio of Y-D-Fix supplemented group was non significantly higher than the water treated group and non significantly lower than the Ennovy group. The Ennovy group had a significantly higher AUC ratio than the water group.

### Effects of Y-D-Fix and Ennovy on alkaline phosphatase and IL8 production in vivo

Right before weaning, the amounts of alkaline phosphatase and IL8 were determined in plasma as stated in the Materials and Methods section. Alkaline phosphatase activity in the Y-D-Fix group (D) was significantly lower than in the water group. APhos activity of the water group (C) was on average (± SEM) 170 ± 13 U/l, of the Y-D-Fix group 137 ± 7 U/l and of the Ennovy group (E) 150 ± 7 U/l. There was no significant difference between Ennovy and water group, nor between Y-D-Fix and Ennovy group. Though lower in the Y-D-Fix group as compared to the water control group, the average aPhos activity in plasma was in all three groups within normal physiological range (figure 4). However, in the water control group, 45% of animals had aPhos activity values that were above the maximum of the physiological limit of 176 U/l. In the Y-D-Fix group this occurred in 9% of animals, and in the Ennovy group in 29% of animals. The average aPhos activity over 176 U/ml was 47 ± 38, 16 ± 1 and 17 ± 14 U/ml respectively for water control, Y-D-Fix and Ennovy, as stated in Table 2. IL8 levels were significantly lower in Y-D-Fix treated group than in water group. Y-D-Fix induced a reduction in plasma IL8 levels of 15% as compared to water control from 67.3 to 57.3 pg/ml. Ennovy reduced IL8 plasma levels with 9% not significantly from 67.3 to 61.3 pg/ml.

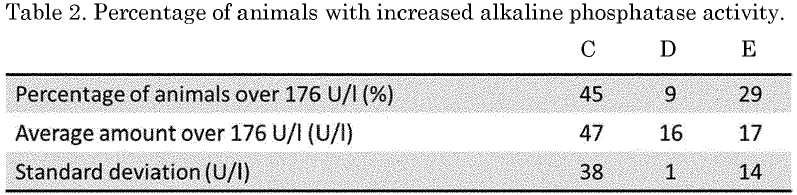

### Short chain fatty acid in feces

The large intestine contains the most dense and metabolically active microbial community in healthy adults, with over 10¹¹ cells/g fecal matter. Large inter-individual variation occurs, however, human studies have shown that dietary composition has an important effect on the gut microbiota, and those influences are detectable as early as a few days after switching between controlled diets. Undigested dietary components such as non digestible carbohydrates, that reach the large intestine and host products, mainly mucin, are fermented by the anaerobic microbial community to produce mainly gases and the three short chain fatty acids (SCFA's) acetate, propionate and butyrate. The SCFA's are rapidly absorbed from the gut lumen. Butyrate is then preferentially used as an energy source by gut epithelial cells, in contrast to propionate and acetate which are metabolized in the liver and achieve a relatively high concentration in peripheral blood, respectively. Intracellular butyrate and propionate decrease inflammation via multiple pathways, by decreasing IL6 and IL12 in colonic macrophages and induction of FOXP3 in regulatory T-cells (Louis et al., 2014). Therefore, the SCFA's in the feces of the treated piglets were analyzed. As it was impossible to collect feces from all individual piglets separately, SCFA feces analysis was performed per group (figure 5).

### Streptococcus suis content in feces

Kabara et al. showed that lauric acid and palmitoleic acid were among the most active free fatty acids from the naturally present medium and long chain free fatty acids against streptococci (Kabara et al., 1972. Antimicrobial agents and chemotherapy 2(1):23-28). Furthermore, as stated above, diet has a major influence on microbial composition in the gut and this might comprise an influence on the amount of pathogens. As weaning-diarrhea is mainly causes by increased numbers and therefore virulent Streptococcus suis in the gut, the amount of this specific pathogen was estimated and the relative amount to total bacteria and to water control group was established (figure 6). The relative amount of Streptococcus suis in piglets feces was 2-fold lower in the Y-D-Fix group, before and after weaning, and 2.4 - 4.4 fold lower in the Ennovy group, before and after weaning respectively. Amounts of total bacteria was unchanged between groups, but the amount of lactobacillus was reduced (data not shown).

### Histological analysis of intestines

After birth, villi length is increased by the sheer stress of blood distributed into the intestinal mucosa. Increased villi length increases intestinal surface area and therefore the capacity for uptake of nutrients. However, weaning usually results in reduced villi length, which might be caused by reduced feed intake in the first week after weaning. Start of the weaning phase with increased villi length is therefore beneficial for piglets to overcome the physiological changes. The administration of Y-D-Fix increased villi length in the mid jejunum with 19% (p = 0.0002), whereas Ennovy increased mid jejunum villi length with 15% (p = 0.028). Increase of villi length by 11% by Y-D-Fix was not significant in proximal jejunum (p = 0.070) as was the increase of 8% by Ennovy (p = 0.192). The increase in the duodenum was 8% for Y-D-Fix, however, this was not significant (p = 0.169), and 13% for Ennovy (p = 0.014) (figure 7 and 8). Most profound effect on villi length was shown in mid jejunum by Y-D-Fix, and Y-D-Fix increased villi length on all three locations examined. Ennovy increased villi length also on all three examined locations, albeit not as much as the 19% increase achieved by Y-D-Fix. Most reports that elaborate on villi length, report differences on mid jejunum, and therefore this specific part might be regarded most important. Y-D-Fix, Ennovy and water control had no effect on scouring index. The incidence of diarrhea was very low and the feces of all groups were hard.

## Claims

1. A food product comprising fat, protein and carbohydrate, wherein the ratio of fat:protein is between 2:1 and 32:1, the product further comprising lauric acid, palmitoleic acid and cholesterol, wherein lauric acid is present in an amount of 15-80 wt% of total solids, palmitoleic acid is present in an amount of 0.1-1.5 wt% of total solids and cholesterol is present in an amount of 0.2-3.5 wt% of total solids.

2. The food product according to claim 1 which is a feed supplement.

3. The food product according to claim 1 or 2 wherein the ratio of protein:carbohydrates is between 5:1 and 1:5, preferably between 4:1 and 1:2.

4. The food product according to any one of claims 1-3, comprising medium chain triglycerides (MCT) having a C8, C10 or C12 chain length and mono-unsaturated fatty acids (MUFA), wherein said MCT are present in an amount of 15-80 wt% of total solids and said MUFA are present in an amount of 0.1-1.5 wt% of total solids.

5. The food product according to any one of claims 1-4, comprising sea buckthorn oil as source of said palmitoleic acid and coconut oil as source of said lauric acid.

6. A food product according to any one of claim 1-5 for use in a method for stimulating growth of a subject.

7. A food product according to any one of claim 1-5 for use in a method for preventing disease in a subject.

8. A food product according to any one of claim 1-5 for use in a method for maintaining or improving intestinal health of a subject.

9. The food product for use according to any one of claims 6-8 whereby said food product is administered at least before weaning of said subject.

10. The food product for use according to any one of claims 6-9, wherein said food product is administered to said subject daily from at least one day before weaning said subject until the day of weaning said subject.

11. The food product for use according to claim 10, wherein said food product is administered to said subject from at least three days before weaning said subject until the day of weaning said subject.

12. The food product for use according to any one of claims 6-11, wherein said lauric acid is administered in a daily dose of 2-12 g, said palmitoleic acid is administered in a daily dose of 20-250 mg and said cholesterol is administered in a daily dose of 0.03-0.5 g.

13. A composition comprising fat, protein and carbohydrate, wherein the ratio of fat:protein is between 2:1 and 32:1, the composition further comprising lauric acid, palmitoleic acid and cholesterol, wherein lauric acid is present in an amount of 15-80 wt% of total solids, palmitoleic acid is present in an amount of 0.1-1.5 wt% of total solids and cholesterol is present in an amount of 0.2-3.5 wt% of total solids, for use in a method of stimulating growth of a subject, preventing disease in a subject and/or for maintaining or improving intestinal health of a subject

14. The composition for use according claim 13 wherein growth after weaning is stimulated, disease after weaning is prevented and/or intestinal health after weaning is maintained or improved.

## Patentansprüche

1. Nahrungsmittelprodukt, umfassend Fett, Protein und Kohlenhydrat, wobei das Verhältnis von Fett:Protein zwischen 2:1 und 32:1 ist, das Produkt ferner umfassend Laurinsäure, Palmitoleinsäure und Cholesterin, wobei Laurinsäure in einer Menge von 15-80 Gew.-% von Gesamtfeststoffen vorhanden ist, Palmitoleinsäure in einer Menge von 0,1-1,5 Gew.-% von Gesamtfeststoffen vorhanden ist und Cholesterin in einer Menge von 0,2-3,5 Gew.-% von Gesamtfeststoffen vorhanden ist.

2. Nahrungsmittelprodukt nach Anspruch 1, welches ein Nahrungsergänzungsmittel ist.

3. Nahrungsmittelprodukt nach Anspruch 1 oder 2, wobei das Verhältnis von Protein:Kohlenhydraten zwischen 5:1 und 1:5, bevorzugt zwischen 4:1 und 1:2, ist.

4. Nahrungsmittelprodukt nach einem der Ansprüche 1-3, umfassend mittelkettige Triglyceride (MCT, engl. medium chain triglycerides) mit einer C8, C10 oder C12 Kettenlänge und einfach ungesättigte Fettsäuren (MUFA, engl. mono-unsaturated fatty acids), wobei die MCT in einer Menge von 15-80 Gew.-% von Gesamtfeststoffen vorhanden sind und die MUFA in einer Menge von 0,1-1,5 Gew.-% von Gesamtfeststoffen vorhanden sind.

5. Nahrungsmittelprodukt nach einem der Ansprüche 1-4, umfassend Sanddornöl als Quelle der Palmitoleinsäure und Kokosnussöl als Quelle der Laurinsäure.

6. Nahrungsmittelprodukt nach einem der Ansprüche 1-5 zur Verwendung in einem Verfahren zur Stimulation von Wachstum von einer Person.

7. Nahrungsmittelprodukt nach einem der Ansprüche 1-5 zur Verwendung in einem Verfahren zur Vorbeugung von Krankheit bei einer Person.

8. Nahrungsmittelprodukt nach einem der Ansprüche 1-5 zur Verwendung in einem Verfahren zur Aufrechterhaltung oder Verbesserung intestinaler Gesundheit von einer Person.

9. Nahrungsmittelprodukt zur Verwendung nach einem der Ansprüche 6-8, wobei das Nahrungsmittelprodukt mindestens vor Abstillen der Person verabreicht wird.

10. Nahrungsmittelprodukt zur Verwendung nach einem der Ansprüche 6-9, wobei das Nahrungsmittelprodukt der Person täglich von mindestens einem Tag vor Abstillen der Person bis zum Tag vom Abstillen der Person verabreicht wird.

11. Nahrungsmittelprodukt zur Verwendung nach Anspruch 10, wobei das Nahrungsmittelprodukt der Person von mindestens drei Tagen vor Abstillen der Person bis zum Tag vom Abstillen der Person verabreicht wird.

12. Nahrungsmittelprodukt zur Verwendung nach einem der Ansprüche 6-11, wobei die Laurinsäure in einer täglichen Dosis von 2-12 g verabreicht wird, die Palmitoleinsäure in einer täglichen Dosis von 20-250 mg verabreicht wird und das Cholesterin in einer täglichen Dosis von 0,03-0,5 g verabreicht wird.

13. Zusammensetzung, umfassend Fett, Protein und Kohlenhydrat, wobei das Verhältnis von Fett:Protein zwischen 2:1 und 32:1 ist, die Zusammensetzung ferner umfassend Laurinsäure, Palmitoleinsäure und Cholesterin, wobei Laurinsäure in einer Menge von 15-80 Gew.-% von Gesamtfeststoffen vorhanden ist, Palmitoleinsäure in einer Menge von 0,1-1,5 Gew.-% von Gesamtfeststoffen vorhanden ist und Cholesterin in einer Menge von 0,2-3,5 Gew.-% von Gesamtfeststoffen vorhanden ist, zur Verwendung in einem Verfahren zur Stimulation von Wachstum von einer Person, Vorbeugung von Krankheit bei einer Person und/oder zur Aufrechterhaltung oder Verbesserung intestinaler Gesundheit einer Person.

14. Zusammensetzung zur Verwendung nach Anspruch 13, wobei Wachstum nach Abstillen stimuliert wird, Krankheit nach Abstillen vorgebeugt wird und/oder intestinale Gesundheit nach Abstillen aufrechterhalten oder verbessert wird.

## Revendications

1. Produit alimentaire comprenant de la graisse, une protéine et un carbohydrate, dans lequel le rapport de graisse:protéine est de 2:1 à 32:1, le produit comprenant de plus de l'acide laurique, de l'acide palmitoléique et du cholestérol, dans lequel l'acide laurique est présent dans une quantité de 15-80 % en masse de la totalité des solides, l'acide palmitoléique est présent dans une quantité de 0,1-1,5 % en masse de la totalité des solides, et le cholestérol est présent dans une quantité de 0,2-3,5 % en masse de la totalité des solides.

2. Produit alimentaire selon la revendication 1, lequel est un complément alimentaire.

3. Produit alimentaire selon la revendication 1 ou 2, dans lequel le rapport de protéine:carbohydrate est de 5:1 à 1:5, de préférence de 4:1 à 1:2.

4. Produit alimentaire selon l'une quelconque des revendications 1-3, comprenant des triglycérides à chaîne moyenne (MCT) ayant une longueur de chaîne C8, C10 ou C12 et des acides gras mono-insaturés (MUFA), dans lequel lesdits MCT sont présents dans une quantité de 15-80 % en masse de la totalité des solides et lesdits MUFA sont présents dans une quantité de 0,1-1,5 % en masse de la totalité des solides.

5. Produit alimentaire selon l'une quelconque des revendications 1-4, comprenant de l'huile d'argousier comme source dudit acide palmitoléique et de l'huile de noix de coco comme source dudit acide laurique.

6. Produit alimentaire selon l'une quelconque des revendications 1-5 pour une utilisation dans un procédé de stimulation de la croissance d'un sujet.

7. Produit alimentaire selon l'une quelconque des revendications 1-5 pour une utilisation dans un procédé de prévention de maladie chez un sujet.

8. Produit alimentaire selon l'une quelconque des revendications 1-5 pour une utilisation dans un procédé de conservation ou d'amélioration de la santé intestinale d'un sujet.

9. Produit alimentaire pour une utilisation selon l'une quelconque des revendications 6-8, ledit produit alimentaire est par-là administré au moins avant le sevrage dudit sujet.

10. Produit alimentaire pour une utilisation selon l'une quelconque des revendications 6-9, dans lequel ledit produit alimentaire est administré audit sujet journalièrement à partir d'au moins un jour avant le sevrage dudit sujet jusqu'au jour de sevrage dudit sujet.

11. Produit alimentaire pour une utilisation selon la revendication 10, dans lequel ledit produit alimentaire est administré audit sujet à partir d'au moins trois jours avant le sevrage dudit sujet jusqu'au jour de sevrage dudit sujet.

12. Produit alimentaire pour une utilisation selon l'une quelconque des revendications 6-11, dans lequel ledit acide laurique est administré dans une dose journalière de 2-12 g, ledit acide palmitoléique est administré dans une dose journalière de 20-250 mg et ledit cholestérol est administré dans une dose journalière de 0,03-0,5 g.

13. Composition comprenant de la graisse, une protéine et un carbohydrate, dans laquelle le rapport de graisse:protéine est de 2:1 à 32:1, la composition comprenant de plus de l'acide laurique, de l'acide palmitoléique et du cholestérol, dans laquelle l'acide laurique est présent dans une quantité de 15-80 % en masse de la totalité des solides, l'acide palmitoléique est présent dans une quantité de 0,1-1,5 % en masse de la totalité des solides et le cholestérol est présent dans une quantité de 0,2-3,5 % en masse de la totalité des solides, pour une utilisation dans un procédé de stimulation de la croissance d'un sujet, prévention de la maladie chez un sujet et/ou conservation ou amélioration de la santé intestinale d'un sujet.

14. Composition pour une utilisation selon la revendication 13, dans laquelle la croissance après le sevrage est stimulée, la maladie après le sevrage est évitée et/ou la santé intestinale après le sevrage est conservée ou améliorée.
